# FASCICULE DE BREVET EUROPEEN

(11) **EP 3 262 993 B1**
(45) Date de publication et mention de la délivrance du brevet: **12.12.2018**
(21) Numéro de dépôt: 17177972.1
(22) Date de dépôt: 26.06.2017
(51) Int. Cl.: A47J 27/21

(54) **BOUILLOIRE MUNIE D'UN DISPOSITIF DE REGULATION DE PRESSION**
WASSERKOCHER, DER MIT EINER DRUCKREGULIERVORRICHTUNG AUSGESTATTET IST
BOILER PROVIDED WITH A PRESSURE REGULATING DEVICE

(30) Priorité: 28.06.2016 FR 1656044
(43) Date de publication de la demande: 03.01.2018
(73) Titulaire: SEB S.A., 69130 Ecully (FR)
(72) Inventeur: FRADET, Gautier, 21120 ECHEVANNES (FR)
(74) Mandataire: Bourrières, Patrice

(56) Documents cités:
- JP-A- 2004 283 425
- JP-A- 2008 212 315

## Description

La présente invention concerne un appareil de chauffage de liquides, notamment une bouilloire électrique, comportant un fond chauffant électrique, un corps et un couvercle formant une enceinte destinée à porter de l'eau à ébullition, et plus particulièrement une bouilloire comportant des dispositifs anti fuites d'eau en dehors de l'enceinte en cas de renversement accidentel.

On connait par exemple du document JP2008212315, une bouilloire comprenant un corps agencé au-dessus d'un fond chauffant électrique et un couvercle formant une enceinte destinée à porter de l'eau à ébullition. La bouilloire comprend un conduit vapeur destiné à convoyer la vapeur dégagée lors de l'ébullition vers un capteur de détection de vapeur. Le conduit de vapeur comporte un dispositif anti fuites d'eau vers le détecteur vapeur et vers l'extérieur en cas de renversement de la bouilloire. Le dispositif anti fuites comporte un clapet muni d'une bille mobile entre une position ouverte dans laquelle le conduit vapeur permet l'échappement de la vapeur et une position fermée dans laquelle le conduit vapeur est obturé. La bouilloire comporte également un conduit de versage de l'eau qui comporte une valve d'ouverture/fermeture manoeuvrée par l'utilisateur pour verser de l'eau hors de l'enceinte.

Dans une telle bouilloire, en cas de renversement accidentel de la bouilloire, le conduit vapeur est obturé par la bille du clapet qui passe en position fermée. Ainsi, l'eau est maintenue dans l'enceinte et il n'y a aucune fuite vers le capteur de détection de vapeur et vers l'extérieur. Cependant, lors de la manipulation de la bouilloire avec de l'eau chaude, la bille du clapet peut passer accidentellement en position fermée et rendre l'enceinte complètement étanche. En conséquence, si un cycle de chauffe est lancé par l'utilisateur, la vapeur générée en fin de cycle peut faire monter la pression dans l'enceinte et rendre la bouilloire dangereuse.

Un but de la présente invention est de remédier aux inconvénients précités et de proposer une bouilloire qui présente une utilisation sûre.

Un autre but de la présente invention est de proposer une bouilloire qui présente une conception simple et qui soit économique à mettre en oeuvre.

Ces buts sont atteints avec une bouilloire comprenant un corps agencé au-dessus d'un fond chauffant électrique et un couvercle formant une enceinte destinée à porter de l'eau à ébullition, la bouilloire comprenant un conduit vapeur destiné à convoyer la vapeur dégagée lors de l'ébullition vers un capteur de détection de vapeur, le conduit de vapeur comportant un dispositif anti fuites d'eau vers le détecteur vapeur et vers l'extérieur en cas de renversement de ladite bouilloire, le dispositif anti fuites comportant au moins un clapet muni d'un organe mobile entre une position ouverte dans laquelle le conduit vapeur permet l'échappement de la vapeur et une position fermée dans laquelle le conduit vapeur est obturé, caractérisée en ce que le clapet comprend un corps en élastomère qui comporte un dispositif de régulation de la pression à l'intérieur de l'enceinte, ledit dispositif de régulation de la pression se déformant pour créer une fuite au-delà d'une pression prédéterminée pouvant être générée dans l'enceinte.

Ainsi, la bouilloire comporte un dispositif de régulation de pression permettant d'éviter une éventuelle surpression dans l'enceinte. De plus, le dispositif de régulation de pression est intégré au corps en élastomère du clapet et utilise les propriétés de rappel élastique de la matière du corps. Une telle construction diminue le nombre de pièces à mettre en oeuvre pour réaliser le dispositif anti fuites d'eau vers le détecteur vapeur et vers l'extérieur et le dispositif de régulation de pression et par conséquent est particulièrement économique.

Avantageusement, le dispositif de régulation de la pression comporte une membrane déformable munie d'une fente, la membrane comportant au moins deux lèvres adjacentes à la fente et qui sont mobiles sous l'effet de la pression régnant dans l'enceinte entre une position jointive de fermeture lorsque la pression est inférieure à une pression déterminée et une position écartée de fuite lorsque la pression est supérieure à une pression déterminée.

Cette disposition permet de réaliser de manière simple et économique le dispositif de régulation de la pression.

Avantageusement, la membrane déformable comporte une fente en forme de croix.

Cette disposition permet d'obtenir une membrane qui comporte quatre lèvres. Une telle construction permet d'obtenir un dispositif de régulation de pression très réactif.

De préférence, la membrane est plane et circulaire.

Cette disposition permet d'obtenir un dispositif de régulation de la pression équilibré, notamment lorsque la membrane comporte une fente en forme de croix en son centre.

Avantageusement, l'élastomère formant le corps du clapet est une silicone.

La silicone est une matière particulièrement avantageuse pour réaliser des assemblages étanches. De plus, une telle matière supporte bien les températures rencontrées dans le circuit vapeur d'une bouilloire.

De préférence, le clapet est agencé dans le couvercle.

Une telle construction permet de disposer dans le couvercle le dispositif anti fuites d'eau vers le détecteur vapeur et vers l'extérieur et le dispositif de régulation de pression. Ainsi, la construction du corps de la bouilloire peut être simplifiée.

Avantageusement, le couvercle comporte une extrémité du conduit vapeur débouchant dans l'enceinte et formée par un fut cylindrique, le corps du clapet en élastomère étant assemblé de manière étanche sur le fût cylindrique.

Cette disposition permet de réaliser un assemblage étanche du corps de clapet sur le couvercle de manière économique.

De préférence, le clapet comporte un siège qui coopère avec l'organe mobile dans la position fermée, le corps du clapet en élastomère étant assemblé de manière étanche sur le siège.

Cette disposition permet de réaliser un assemblage étanche du clapet de manière économique.

Avantageusement, l'organe mobile est formé par une bille.

De préférence, la bouilloire comporte deux clapets muni chacun d'un dispositif de régulation de la pression.

La bouilloire comporte une poignée agencée verticalement sur le corps et de manière diamétralement opposée à un bec verseur. Les clapets sont agencés de manière symétrique de part et d'autre d'un plan vertical passant par la poignée et le bec verseur. En cas de renversement, la bouilloire peut prendre appui sur le corps et sur un premier coté de la poignée pour ainsi solliciter un clapet ou elle peut prendre appui sur le corps et sur un deuxième coté de la poignée pour ainsi solliciter l'autre clapet.

L'invention sera mieux comprise à l'étude du mode de réalisation pris à titre nullement limitatif et illustré dans les figures annexées dans lesquelles :
- La figure 1 illustre une vue en perspective d'une bouilloire selon un mode particulier de réalisation de l'invention.
- La figure 2 illustre une vue du dessous du couvercle de la bouilloire illustrée sur la figure 1.
- La figure 3 illustre une vue en coupe III-III du couvercle illustré sur la figure 2.

- La figure 4 illustre une vue en perspective du clapet muni du dispositif de régulation de la pression illustré sur la figure 3, l'organe mobile du dispositif de régulation de la pression étant en position fermée.
- La figure 5 illustre une vue du dessus selon une direction V du clapet muni du dispositif de régulation de la pression illustré sur la figure 4.

On notera que, dans ce document, les termes «horizontal», «vertical», «inférieur», «supérieur», «haut», «bas», employés pour décrire la bouilloire, font référence à cette bouilloire en situation d'usage, lorsqu'elle est posée sur un plan de travail horizontal.

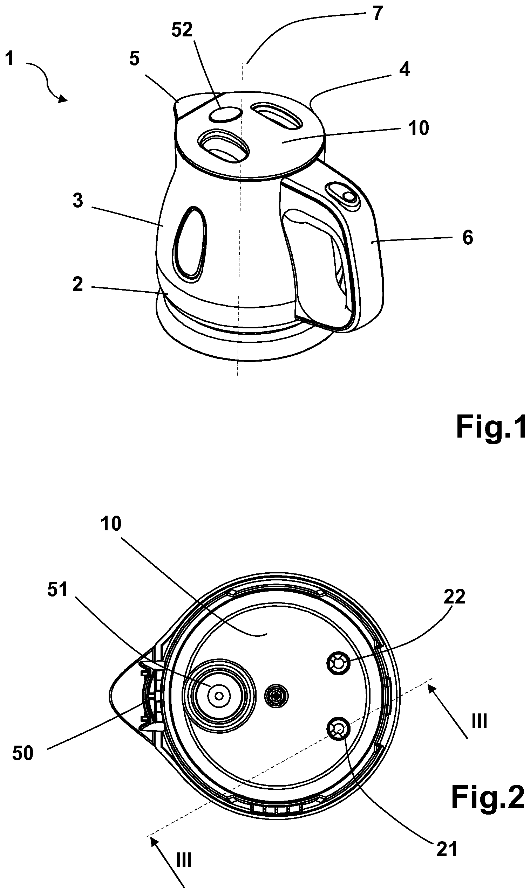

Dans l'exemple de réalisation représenté aux figures 1 à 3, une bouilloire 1 comporte un socle 2 alimenté électriquement par un cordon (non représenté sur les figures) et un corps 3 formant un réceptacle pour l'eau. Le corps 3 comprend une ouverture supérieure 4 de remplissage qui est fermée par un couvercle 10. La bouilloire 1 comprend un bec verseur 5 situé au niveau de l'ouverture supérieure 4 et une poignée 6 située à l'opposé du bec verseur 5 par rapport à l'ouverture supérieure 4. Le corps 3 a une forme sensiblement cylindrique comprenant un axe vertical 7. Le couvercle 10 est amovible par rapport au corps 3 et le couvercle est destiné à être assemblé de manière étanche sur le corps 3 selon un mouvement de translation sensiblement parallèle à l'axe vertical 7 du corps 3.

Le socle 2 comporte un fond chauffant formé d'une coupelle en acier inoxydable sous laquelle sont agencés un diffuseur en aluminium et un élément chauffant (non représentés sur les figures). Le corps 3 agencé au-dessus du fond chauffant et le couvercle 10 forme une enceinte destinée à porter de l'eau à ébullition. La bouilloire 1 comporte un conduit vapeur 20 destiné à convoyer la vapeur dégagée lors de l'ébullition d'une partie supérieure du corps 3 vers un capteur de détection de vapeur (non représenté sur les figures) agencé dans le socle 2. Un afflux de vapeur sur le capteur de détection de vapeur déclenche la coupure de l'alimentation électrique du fond chauffant.

La bouilloire 1 comporte également un conduit de versage 50 de l'eau agencé dans le couvercle 10 et qui communique avec le bec verseur 5. Le conduit de versage 50 comprend une valve 51 mobile entre une position d'ouverture dans laquelle le conduit de versage 50 permet de verser de l'eau hors de l'enceinte et une position de fermeture dans laquelle le conduit de versage 50 est fermé. Le couvercle 10 comporte un bouton de manoeuvre 52 de la valve 51.

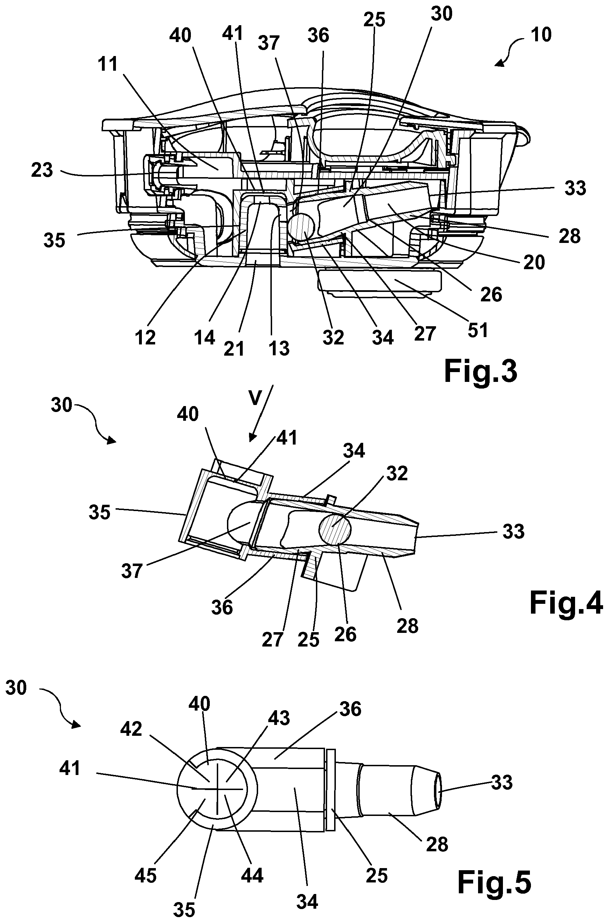

Le conduit vapeur 20 s'étend en partie dans le couvercle 10 et en partie verticalement le long du corps 3. Tel que visible aux figures 2 et 3, la partie du conduit vapeur 20 qui s'étend dans le couvercle 10 comporte deux orifices d'entrée 21, 22 et un orifice de sortie 23 agencé en vis-à-vis d'un orifice d'entrée du conduit vapeur 20 qui s'étend en partie verticalement le long du corps (non représenté sur les figures). L'orifice d'entrée 21 est relié à un clapet 30 et l'orifice d'entrée 22 est relié à un clapet de construction identique au clapet 30. Seul le clapet 30 sera décrit. Le clapet 30 est muni d'une bille 32 mobile entre une position ouverte dans laquelle le conduit vapeur 20 permet l'échappement de la vapeur et une position fermée dans laquelle le conduit vapeur 20 est obturé. Le clapet 30 comporte un orifice de sortie 33 qui communique avec une chambre interne 11 au couvercle 10. La chambre interne 11 fait partie du conduit vapeur 20 et comporte l'orifice de sortie 23.

Le couvercle 10 comporte au-dessus de l'orifice d'entrée 21 un fut 12 cylindrique qui forme une extrémité du conduit vapeur 20 débouchant dans l'enceinte. Le clapet 30 comporte un corps 34 en élastomère, notamment en silicone, qui présente une portion de forme cylindrique 35 qui est assemblée de manière étanche sur le fût 12. Le corps 34 du clapet 30 comporte une paroi tubulaire 36 qui s'étend latéralement à la portion de forme cylindrique 35. Le fût 12 et la portion de forme cylindrique 35 comportent respectivement une ouverture traversante 13 et une ouverture traversante 37 qui sont toutes deux agencées en correspondance.

Le clapet 30 comporte un siège 25 de forme tubulaire qui comporte une restriction de section 26. Le siège 25 comporte une partie amont 27 à la restriction de section 26 qui est assemblée de manière étanche avec la paroi tubulaire 36. Le siège 25 comporte une partie aval 28 à la restriction de section 26 et comprend l'orifice de sortie 33. La bille 32 coopère avec la restriction de section 26 dans la position fermée du clapet 30 (Fig.5).

Le corps 34 en élastomère du clapet 30 comprend un dispositif de régulation de la pression 40 régnant à l'intérieur de l'enceinte. Le dispositif de régulation de la pression est formé par une membrane 40 circulaire et plane qui coiffe la portion de forme cylindrique 35. Le fût 12 comporte une extrémité supérieure qui comprend une ouverture traversante 14 agencée en vis-à-vis de la membrane 40.

La membrane est munie d'une fente 41 en forme de croix (Fig.5) qui définit quatre lèvres 42-45. Les lèvres 42-45 sont mobiles sous l'effet de la pression régnant dans l'enceinte entre une position jointive de fermeture lorsque la pression est inférieure à une pression déterminée et une position écartée de fuite lorsque la pression est supérieure à une pression déterminée.

En fonctionnement, lorsque l'utilisateur manipule la bouilloire 1 avec de l'eau chaude, chaque bille 32 de chaque clapet 30 peut passer accidentellement en position fermée et rendre l'enceinte complètement étanche. Si un cycle de chauffe est lancé par l'utilisateur, la vapeur générée en fin de cycle entre par l'orifice d'entrée 21, 22, puis passe par les ouvertures traversantes 13, 37 et est bloquée par la bille 32 en appui sur la restriction de section 26. Lorsque la pression régnant dans l'enceinte dépasse une pression prédéterminée, la vapeur passe dans l'ouverture traversante 14 de l'extrémité supérieure du fût 12 et déforme les lèvres 42-45 de la membrane 40 pour les faire passer de leur position jointive de fermeture à leur position écartée de fuite. Ainsi, la pression excédentaire peut être évacuée à l'extérieur de l'enceinte.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, la membrane 40 du dispositif de régulation de la pression prend la forme d'un disque bombé.

## Revendications

1. Bouilloire (1) comprenant un corps (3) agencé au-dessus d'un fond chauffant électrique et un couvercle (10) formant une enceinte destinée à porter de l'eau à ébullition, ladite bouilloire (1) comprenant un conduit vapeur (20) destiné à convoyer la vapeur dégagée lors de l'ébullition vers un capteur de détection de vapeur, ledit conduit de vapeur (20) comportant un dispositif anti fuites d'eau (30) vers le détecteur vapeur et vers l'extérieur en cas de renversement de ladite bouilloire (1), ledit dispositif anti fuites comportant au moins un clapet (30) muni d'un organe (32) mobile entre une position ouverte dans laquelle le conduit vapeur (20) permet l'échappement de la vapeur et une position fermée dans laquelle le conduit vapeur (20) est obturé, **caractérisée en ce que** le clapet (30) comprend un corps (34) en élastomère qui comporte un dispositif de régulation de la pression (40) à l'intérieur de l'enceinte, ledit dispositif de régulation de la pression se déformant pour créer une fuite au-delà d'une pression prédéterminée pouvant être générée dans l'enceinte.

2. Bouilloire (1) selon la revendication 1, **caractérisée en ce que** le dispositif de régulation de la pression comporte une membrane (40) déformable munie d'une fente (41), la membrane (40) comportant au moins deux lèvres (42-45) adjacentes à la fente (41) et qui sont mobiles sous l'effet de la pression régnant dans l'enceinte entre une position jointive de fermeture lorsque la pression est inférieure à une pression déterminée et une position écartée de fuite lorsque la pression est supérieure à une pression déterminée.

3. Bouilloire (1) selon la revendication 2, **caractérisée en ce que** la membrane (40) déformable comporte une fente (41) en forme de croix.

4. Bouilloire (1) selon l'une quelconque des revendications 2 à 3, **caractérisée en ce que** la membrane (40) est plane et circulaire.

5. Bouilloire (1) selon l'une quelconque des revendications 1 à 4, **caractérisée en ce que** l'élastomère formant le corps du clapet (30) est une silicone.

6. Bouilloire (1) selon l'une quelconque des revendications 1 à 5, **caractérisée en ce que** le clapet (30) est agencé dans le couvercle (10).

7. Bouilloire (1) selon la revendication 6, **caractérisée en ce que** le couvercle (10) comporte une extrémité du conduit vapeur (20) débouchant dans l'enceinte et qui est formée par un fut (12) cylindrique, le corps (34) du clapet (30) en élastomère étant assemblé de manière étanche sur le fût (12) cylindrique.

8. Bouilloire (1) selon l'une quelconque des revendications 1 à 7, **caractérisée en ce que** le clapet (30) comporte un siège (25) qui coopère avec l'organe (32) mobile dans la position fermée, le corps (34) du clapet (30) en élastomère étant assemblé de manière étanche sur le siège (25).

9. Bouilloire (1) selon la revendication 8, **caractérisée en ce que** l'organe mobile est formé par une bille (32).

10. Bouilloire (1) selon l'une quelconque des revendications 1 à 9, **caractérisée en ce qu'**elle comporte deux clapets (30) munis chacun d'un dispositif de régulation de la pression (40).

## Patentansprüche

1. Wasserkocher (1), umfassend einen Körper (3), der über einem elektrischen Heizboden angeordnet ist, und eine Abdeckung (10), wobei er eine Kammer bildet, die dazu bestimmt ist, Wasser zum Kochen zu bringen, wobei der Wasserkocher (1) einen Dampfkanal (20) umfasst, der dazu bestimmt ist, den während des Kochens freigesetzten Dampf zu einem Dampferfassungssensor zu fördern, wobei der Dampfkanal (20) eine Auslaufschutzvorrichtung (30) zu dem Dampfdetektor und nach außen hin im Fall des Umsturzes des Wasserkochers (1) aufweist, wobei die Auslaufschutzvorrichtung mindestens eine Klappe (30) aufweist, die mit einem Element (32) versehen ist, das zwischen einer offenen Position, in der der Dampfkanal (20) das Entweichen des Dampfes ermöglicht, und einer geschlossenen Position beweglich ist, in der der Dampfkanal (20) geschlossen ist, **dadurch gekennzeichnet, dass** die Klappe (30) einen Körper (34) aus Elastomer umfasst, der eine Vorrichtung zur Regelung des Drucks (40) innerhalb der Kammer aufweist , wobei sich die Vorrichtung zur Regelung des Drucks verformt, um ein Leck oberhalb eines vorbestimmten Drucks zu erzeugen, der in der Kammer erzeugt werden kann.

2. Wasserkocher (1) nach Anspruch 1, **dadurch gekennzeichnet, dass** die Vorrichtung zur Regelung des Drucks eine verformbare Membran (40) aufweist, die mit einem Schlitz (41) versehen ist, wobei die Membran (40) mindestens zwei Lippen (42 - 45) aufweist, die zu dem Schlitz (41) benachbart sind und die unter der Wirkung des Drucks, der in der Kammer herrscht, zwischen einer fugendichten Schließposition, wenn der Druck unter einem vorbestimmten Druck liegt, und einer beabstandeten Auslaufposition bewegbar sind, wenn der Druck größer als ein vorbestimmter Druck ist.

3. Wasserkocher (1) nach Anspruch 2, **dadurch gekennzeichnet, dass** die verformbare Membran (40) einen Schlitz (41) in Form eines Kreuzes aufweist.

4. Wasserkocher (1) nach einem der Ansprüche 2 bis 3, **dadurch gekennzeichnet, dass** die Membran (40) flach und kreisförmig ist.

5. Wasserkocher (1) nach einem der Ansprüche 1 bis 4, **dadurch gekennzeichnet, dass** das den Körper der Klappe (30) bildende Elastomer ein Silikon ist.

6. Wasserkocher (1) nach einem der Ansprüche 1 bis 5, **dadurch gekennzeichnet, dass** die Klappe(30) in der Abdeckung (10) angeordnet ist.

7. Wasserkocher (1) nach Anspruch 6, **dadurch gekennzeichnet, dass** die Abdeckung (10) eine Ende des Dampfkanals (20) aufweist, der in die Kammer mündet und von einer zylindrischen Hülse (12) gebildet wird, wobei der Körper (34) der Klappe (30) aus Elastomer dicht auf der zylindrischen Hülse (12) angebracht ist.

8. Wasserkocher (1) nach einem der Ansprüche 1 bis 7, **dadurch gekennzeichnet, dass** die Klappe (30) einen Sitz (25) aufweist, der mit dem beweglichen Element (32) in der geschlossenen Position zusammenwirkt, wobei der Körper (34) der Klappe (30) aus Elastomer dicht auf dem Sitz (25) angebracht ist.

9. Wasserkocher (1) nach Anspruch 8, **dadurch gekennzeichnet, dass** das bewegliche Element durch eine Kugel (32) gebildet ist.

10. Wasserkocher (1) nach einem der Ansprüche 1 bis 9, **dadurch gekennzeichnet, dass** er zwei Klappen (30) aufweist, die jeweils mit einer Vorrichtung zur Regelung des Drucks (40) versehen sind.

## Claims

1. Kettle (1) comprising a body (3) arranged above an electric heating base and a lid (10) forming a chamber intended to raise the water to boiling point, said kettle (1) comprising a steam pipe (20) intended to convey the steam released during boiling to a steam-detection sensor, said steam pipe (20) comprising a device for preventing leakage of water (30) to the steam detector and to the outside in the event of said kettle (1) being tipped over, said anti-leakage device comprising at least one valve (30) provided with a member (32) able to move between an open position in which the steam pipe (20) allows the escape of steam and a closed position in which the steam pipe (20) is closed off, **characterised in that** the valve (30) comprises an elastomer body (34) that comprises a device for regulating the pressure (40) inside the chamber, said pressure-regulation device deforming in order to create a leak beyond a predetermined pressure able to be generated in the chamber.

2. Kettle (1) according to claim 1, **characterised in that** the pressure-regulation device comprises a deformable membrane (40) provided with a slit (41), the membrane (40) comprising at least two lips (42-45) adjacent to the slit (41) and which are able to move under the effect of the pressure prevailing in the chamber between a contiguous closure position when the pressure is below a given pressure and a separated leakage position when the pressure is higher than a given pressure.

3. Kettle (1) according to claim 2, **characterised in that** the deformable membrane (40) comprises a cruciform slit (41).

4. Kettle (1) according to either claim 2 or claim 3, **characterised in that** the membrane (40) is planar and circular.

5. Kettle (1) according to any of claims 1 to 4, **characterised in that** the elastomer forming the body of the valve (30) is a silicone.

6. Kettle (1) according to any of claims 1 to 5, **characterised in that** the valve (30) is arranged in the lid (10).

7. Kettle (1) according to claim 6, **characterised in that** the lid (10) comprises an end of the steam pipe (20) emerging in the chamber and which is formed by a cylindrical barrel (12), the body (34) of the elastomer valve (30) being assembled sealingly on the cylindrical barrel (12).

8. Kettle (1) according to any of claims 1 to 7, **characterised in that** the valve (30) comprises a seat (25) that cooperates with the movable member (32) in the closed position, the body (34) of the elastomer valve (30) being assembled sealingly on the seat (25).

9. Kettle (1) according to claim 8, **characterised in that** the movable member is formed by a ball (32).

10. Kettle (1) according to any of claims 1 to 9, **characterised in that** it comprises two valves (30) each provided with a pressure-regulation device (40).
